Europäisches Patentamt

European Patent Office

Office européen des brevets

(11) Publication number: **0 226 456**
A2

## (12) EUROPEAN PATENT APPLICATION

(21) Application number: 86309653.3

(22) Date of filing: 11.12.86

(51) Int. Cl.⁴: **H 04 N 5/92**

(30) Priority: 13.12.85 JP 281355/85
03.06.86 JP 128659/86

(43) Date of publication of application:
24.06.87 Bulletin 87/26

(84) Designated Contracting States: DE FR GB

(71) Applicant: Matsushita Electric Industrial Co., Ltd.
1006, Oaza Kadoma
Kadoma-shi Osaka-fu, 571 (JP)

(72) Inventor: Tomita, Masao
Higashi 2-102 go 271-2, Oaza Uchiage
Neyagawa-shi Osaka-fu 572 (JP)

(74) Representative: Crawford, Andrew Birkby et al
A.A. THORNTON & CO. Northumberland House 303-306
High Holborn
London WC1V 7LE (GB)

(54) Signal recording and reproducing apparatus.

(57) A disclosed signal recording/reproducing apparatus enables a direct FM recording. An input signal is directly frequency-modulated by a digital frequency modulator in digital signal form to be a FM signal. The FM signal is recorded on a recording medium. The recorded FM signal is reproduced, and frequency-demodulated by a digital frequency-demodulator in digital signal form using an arc trigonometrical function to obtain the original signal. The apparatus may further comprises the conventional color under recording and reproducing type signal processing circuit which is used selectively by a mode changing switch.

EP 0 226 456 A2

## Description

Signal recording and reproducing apparatus

1. Field of the Invention

This invention relates to a signal recording and reproducing apparatus which records signals into a recording medium and reproduces the recorded signals.

2. Description of the Prior Art

Usually, frequency modulation (FM) is used to transmit a signal having DC component such as a video signal through a transmission path causing large amplitude fluctuations. For example, FM recording is used in most of the existing video cassette recorders (VCRs) because the magnetic tape causes large amplitude fluctuations.

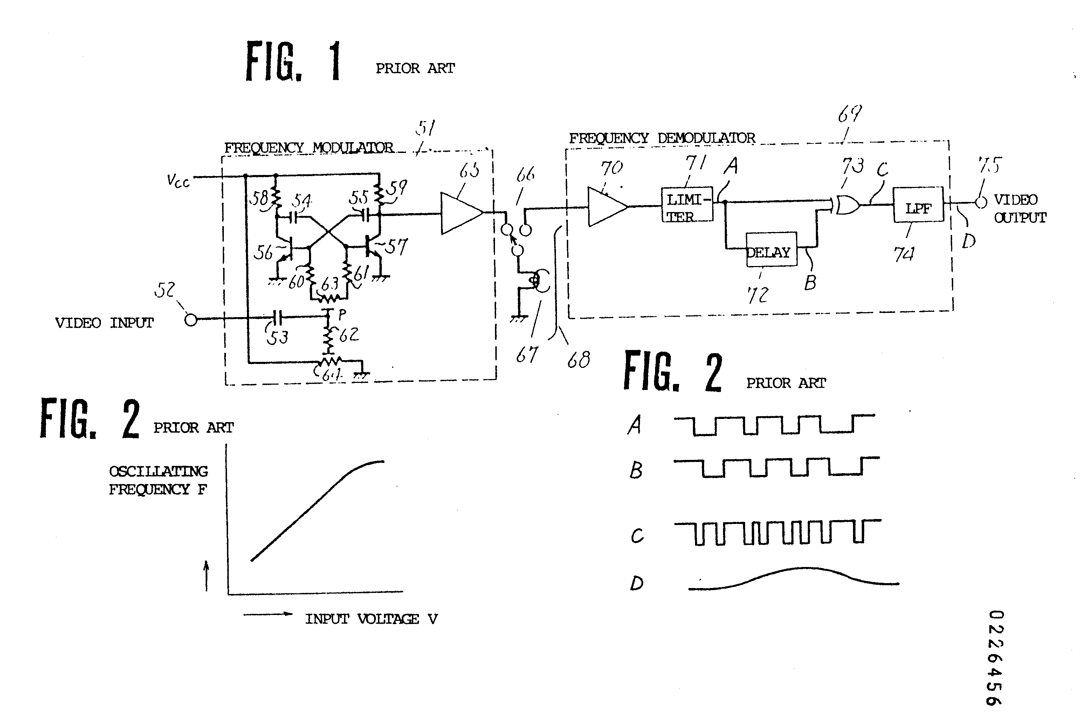

Generally, FM modulators and FM demodulators widely used in the conventional VCRs treat analog signals. Most of the FM modulators are the astable multivibrator type and most of the FM demodulators are the pulse counter type. A typical example of such VCRs is shown in FIG. 1.

Referring to FIG. 1, a recording section 51 frequency-modulates an input video signal fed to an input terminal 52 by an FM modulator of the multivibrator type constituting of capacitors 53, 54 and 55, transistors 56 and 57, resistors 58, 59, 60, 61 and 62, and variable resistors 63 and 64, and amplifies the frequency-modulated signal (FM signal) by a recording amplifier 65. The FM modulator generates a carrier frequency signal at the multivibrator, and modulates the carrier frequency signal with the input video signal to obtain the FM signal at the collector of transistor 57. The FM modulator is a kind of voltage-frequency (V-F) converter having a relation between the input voltage (at a point P) and the output frequency as shown in FIG. 2(a). The carrier frequency is adjusted by variable resistor 64, and the balance the frequency modulation is adjusted by variable resistor 63.

The FM signal amplified by recording amplifier 65 is applied to a magnetic head 67 through a switch 66 and recorded on a magnetic tape 68 by magnetic head 67.

The FM signal recorded on magnetic tape 68 is reproduced by head 67, and applied to a reproducing section 69 through switch 66. Reproducing section 69 consists of a reproducing amplifier 70 for amplifying the reproduced FM signal, and a FM demodulator consisting of a limiter 71, a delay circuit 72, an exclusive (EX)-OR circuit 73 and a low-pass filter (LPF) 74. Signals at A, B, C and D in FIG. 1 are respectively shown as A, B, C and D in FIG. 2(b). FM signal A having a fixed amplitude outputted from limiter 71 is delayed by delay circuit 72 to be signal B. Signals A and B are subjected to EX-OR operation by EX-OR circuit 73 to be pulse-time modulation signal C. Video signal D is obtained at an output terminal 75 by passing signal C through LPF 74. In this way, the conventional video signal recording and reproducing method uses analog signal processing technique including frequency modulation (for recording) and demodulation (for reproduction).

Such a conventional method using analogue modulator and demodulator has two fatal problems - beat and jitter.

First, undesirable beat components are produced in the demodulated signal frequency band. The beat components appear on the display screen as anoyance noises to degrade reproduced picture quality. Especially when the composite color signal of base band is frequency modulated, energy of the color signal frequency-interleaved into the high frequency band of the luminance signal is very strong, so that the beat components cause a moire on the display screen.

The beat components are produced mainly from the following three causes.

First cause is a mutual leakage between the video signal and the modulated signal. The beat components caused by this leakage are produced in both of the FM modulator and FM demodulator. This type of beat components can be reduced by a proper circuit design and a proper arrangement of parts and wiring, but are impossible to be completely removed by the analog signal processing technique.

Second cause is a distortion in the circuit, especially a distortion of an even order harmonic component. In the modulator this distortion is generated due to an imperfect balance adjustment by variable resistor 63 or due to a change of the resistance of resistor 63. In the demodulator, the distortion is generated due to unbalance of limiter 71. Thus, fine adjustments are required for the analog circuits.

Third cause is the demodulation operation itself, which is unavoidable as far as the pulse counter type demodulator is used. If the modulator or the limiter are well-balanced, the original carrier component ($f_c$) is eliminated, and the side-band spectra of second and fourth order harmonics $2f_c$, $4f_c$ appear at the output of the demodulator. Since higher order harmonic side-bands are also contained in the FM signal in addition to the first order side-band, the lower side band of double frequency components in the FM signal leaks to the frequency band of the demodulated video signal and generates a beat interference of so-called moire phenomenon.

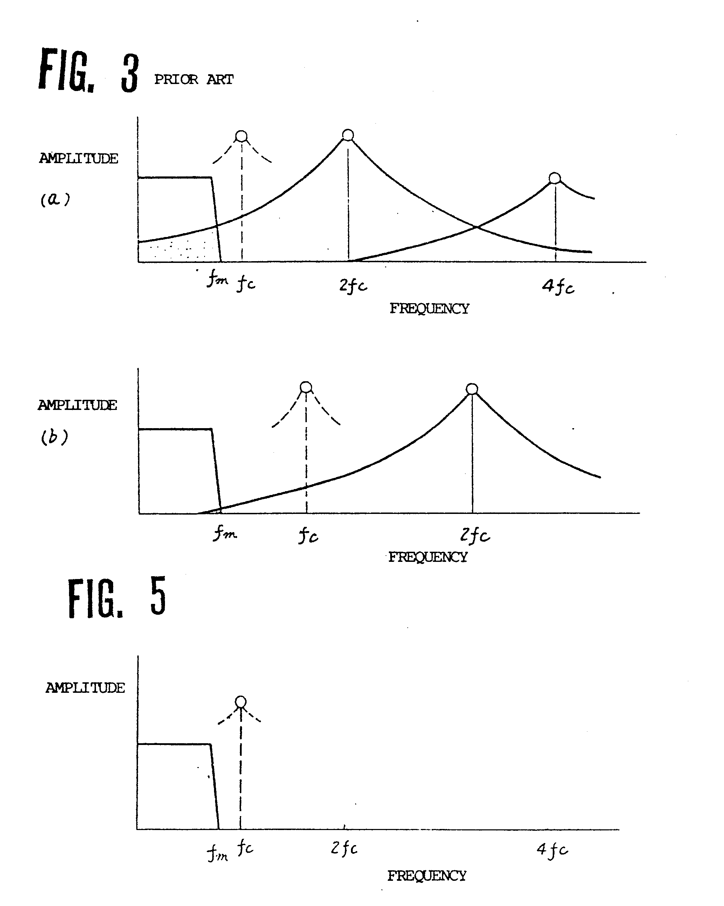

FIG. 3(a) shows a case that the carrier frequency ($f_c$) is selected near the maximum frequency ($f_m$) of the input video signal. In this case, as apparent from the figure, the lower side band of the double frequency component leaks into the base band signal, and generates a beat interference.

FIG. 3(b) shows a case that the carrier frequency ($f_c$) is selected twice the maximum frequency ($f_m$) of the input video signal. In the case, the lower side-band components of the double frequency components which leak to the modulated base band signal are very little. However, a wide frequency band is necessary for the FM signal recording and reproducing system and transmission system, because the carrier frequency ($f_c$) is high.

Generally, the beat allowable limit of the double frequency components is such that the second lower side-band component of the maximum frequency ($f_m$) does not leak into the video signal frequency band. To satisfy this requirement, the carrier frequency is selected as follows:

$$f_c > 1.5\ f_m \dots \dots \dots \dots (1)$$

In other words, $f_c$ should not be less than $1.5\ f_m$ for avoiding the beat interference. However, if $f_c$ is selected far high, a wide frequency band is necessary for the transmission system, which means the cost of the transmission system increases.

If a composite color signal having strong color signal in a high frequency band of a luminance signal is modulated, the influence of the beat interference becomes larger.

Second problem of the conventional direct FM recording method is the jitter correction. It is known that the tape-head system of the VCR generates a jitter by a velocity fluctuation of a rotation part or a vibration of the tape. This jitter causes a time base fluctuation of the reproduced signal. Since color information is carried as the phase information of the color signal, it is necessary to correct the jitter to reproduce correct colors.

In the widely used consumer VCRs, the color signal is recorded after the frequency of the color signal is converted to lower frequency to reduce the influence of the jitter. This method is called the color-under recording method.

But in the direct FM recording method, the color signal exists in the high frequency band, so that the color signal is easily influenced by the jitter. It is different to realized jitter correction by analog signal processing technique, or it would be expensive to fabricate such an analog jitter correction circuit in the consumer VCRs.

SUMMARY OF THE INVENTION

An object of this invention is to provide a high quality signal transmission in a narrow frequency band, applicable to a signal recording and reproducing apparatus.

A concrete object of this invention is to eliminate a leakage between a modulating signal and a modulated signal, and to eliminate complicated fine adjustments of a signal recording and reproducing apparatus.

Another concrete object of this invention is to eliminate a leakage of lower side band of double frequency component into the base band, and to eliminate a mutual leakage between a FM signal and a demodulated signal.

Still another concrete object of this invention is to control the jitter of a composite color signal by correcting the time base fluctuation of the signal.

Yet another concrete object of this invention is to set the FM carrier frequency to be below 1.5 times a maximum input signal frequency to make narrower the recording frequency band of the tape-head system. thereby realizing the direct FM recording.

Another object of this invention is to realize a VCR having high picture quality performance of the direct FM recording method and compatible to the conventional color-under recording type VCRs.

These objects are achieved by a signal recording and reproducing apparatus according to the present invention, which comprises a digital frequency modulator for modulating an input signal in digital signal form to obtain a FM signal, means for recording the FM signal on a recording medium and reproducing the recorded FM signal, and a digital frequency demodulator for demodulating the reproduced FM signal in digital signal form by using an arc trigonometrical function. This apparatus has a direct FM recording function.

Preferably, the apparatus further comprises a time base corrector for correcting a time base fluctuation of the frequency demodulated signal.

The above and other objects, features and advantages of the present invention will be apparant from the following description taken in connection with the preferred embodiments with reference to the accompanying drawings in which:

BRIEF DESCRIPTION OF THE DRAWINGS

FIG. 1 is a block diagram showing a typical conventional magnetic tape recorder;

FIG. 2(a) is V-F characteristic curve of the frequency modulator in FIG. 1;

FIG. 2(b) is a waveform chart showing signals in the frequency demodulator in FIG. 1;

FIGs. 3(a) and 3(b) respectively are frequency allocation diagram for explaining a problem in the prior art;

FIG. 4 is a block diagram of a magnetic tape recorder as an embodiment of the present invention;

FIG. 5 is a frequency allocation diagram realized according to the present invention;

FIG. 6 is a block diagram of a magnetic tape recorder as another embodiment of the present invention;

FIG. 7 is a block diagram of a video tape recorder as still another embodiment of the present invention;

FIGs. 8 and 9 are frequency allocation diagrams of the conventional color under recording video tape recorder and the conventional direct FM recording video tape recorder, respectively; and

FIG. 10 is a frequency allocation diagram of the embodiment in FIG. 7.

DESCRIPTION OF THE PREFERRED EMBODIMENTS

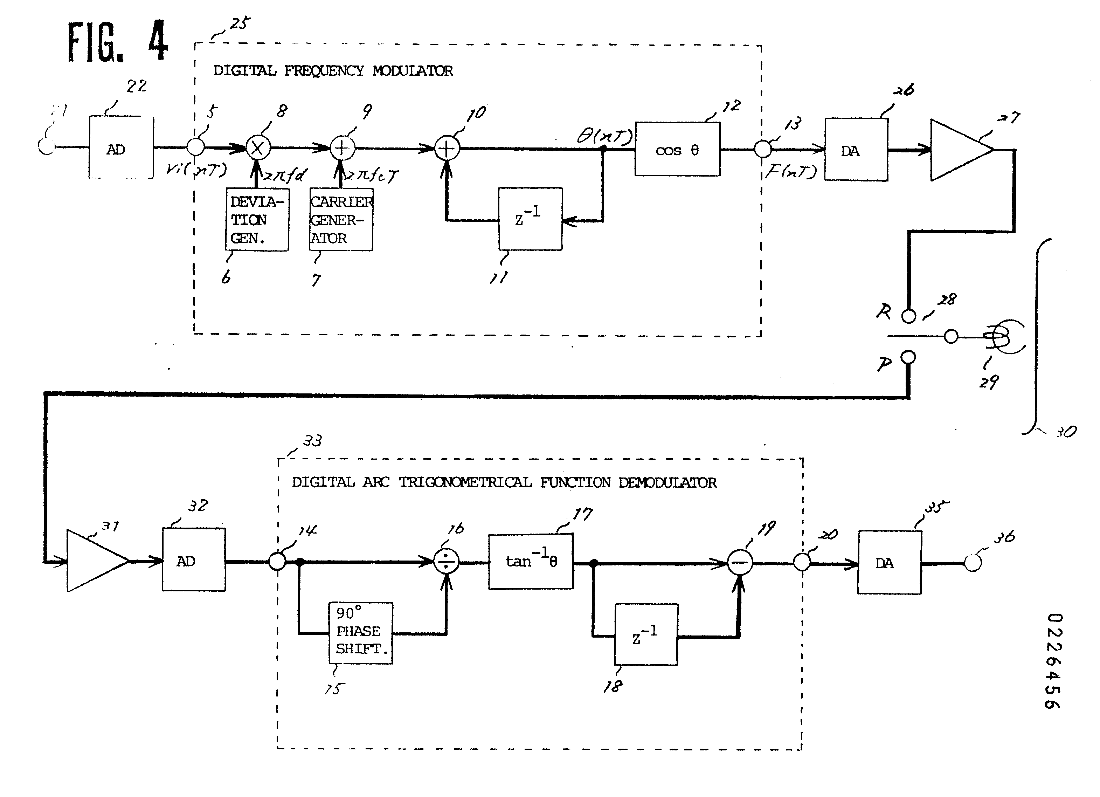

FIG. 4 shows a schematic block diagram of a magnetic tape recorder as an embodiment of the present invention. An input signal (analog signal) fed from an input terminal 21 is converted to a digital signal by an analog-to-digital (AD) converter 22. This digital signal is frequency-modulated by a digital frequency modulator 25.

At an input terminal 5 of the digital frequency modulator 25, the value of the digital signal at an n-th (n: any integer) sampling point is expressed as $V_i(nT)$, where T is a sampling period. The value $V_i(nT)$ is multiplied by a value $2\pi f_d$ ($f_d$: frequency deviation) produced by a deviation generator 6 at a digital multiplier 8. The multiplied value is added with a

value $2\pi f_c T$ ($f_c$: carrier frequency) produced by a carrier generator 7 at a digital adder 9. Output signal of the adder 9 is integrated by a circuit consisting of a digital adder 10 and a digital delay circuit ($Z^{-1}$) 11 to be a phase signal $\Theta(nT)$ of the modulated signal. A cosine function generator ($\cos\Theta$) 12 generate a $\cos\Theta$ signal with respect to the phase signal $\Theta$. Thus. the signal appearing at an output terminal 13 to the frequency modulator 25 represents a sinusoidal wave corresponding to the phase signal $\Theta$. or a digital frequency-modulated (FM) signal whose frequency changes corresponding to the amplitude of the input analog signal.

The value of the FM signal at n-th sampling point. F(nT), is expressed as:

$$F(nT) = \cos[\,2\pi f_c T + 2\pi f_d Vi(nT) + \Theta\{(n-1)T\}\,] \ .. (2)$$

The cosine function generator 12 may be easily configured by a read-only memory (ROM) which stores a table of the $\cos\Theta$ function values.

The digital FM signal from the digital frequency modulator 25 is converted to an analog FM signal by a digital-to-analog (DA) converter 26, and then amplified by a recording amplifier 27. The amplified FM signal is applied through a record (R) terminal of a record/playback change-over switch 28 to a head 29 to be recorded on a magnetic tape 30 in a known manner.

The recorded FM signal is reproduced by head 29 and applied through a playback (P) terminal of switch 28 to a reproducing amplifier 31 where it is amplied in a known manner. The amplified FM signal is converted to a digital FM signal by an AD converter 32. This digital FM signal is frequency-demodulated in digital signal form by a digital arc trigonometrical function demodulator 33.

Assume that the digital FM signal inputted to an input terminal 14 of demodulator 33 be expressed as A$\sin\Theta$ (A: amplitude, B: phase). The digital FM signal is applied to a divident terminal of a digital divider 16. On the other hand, a digital $90^\circ$ phase shifter 15 shifts the phase of the digital FM signal by $90^\circ$ to obtain a signal expressed as A$\cos\Theta$, which is applied to a divisor terminal of divider 16. Thus. the output signal of divider 16 is expressed as tan $\Theta$ having amplitude A been cancelled. Phase shifter 15 is, for example, a Hilbelt transducer. A arc trigonometric function ($\tan^{-1}\Theta$) circuit 17 produces the phase signal $\Theta$ from the output signal of divider 16. Arc trigonometric function circuit 17 may be comprised by a ROM storing a function table of $\tan^{-1}\Theta$. The phase signal from arc trigonometric function circuit 17 is differentiated by a differentiation circuit comprised by a digital delay circuit ($Z^{-1}$) 18 and a digital subtractor 19, thereby obtaining a digital demodulated signal at an output terminal 20 of demodulator 33.

This digital demodulated signal is converted by a DA converter 35 to an analog demodulated signal which is equivalent to the input signal which was originally inputted to input terminal 21 of the tape recorder. This analog demodulated signal is outputted from an output terminal 36 of the tape recorder.

The $\tan^{-1}\Theta$ circuit 17 in FIG. 4 may be replaced by a $\sin^{-1}\Theta$ circuit. In this case, the circuit consisting of $90^\circ$ phase shifter 15 and divider 16 is replaced by a fast automatic gain control circuit (fast AGC) which controls the amplitude of the FM signal to be constant.

In the embodiment shown in FIG. 4. each of the modulation and demodulation is performed in digital signal form. Therefore, no signal leakage occurs between the base band signal and the FM signal. There is no fear to cause a signal distortion due to imcomplete balance adjustment or imbalance caused by the life of components.

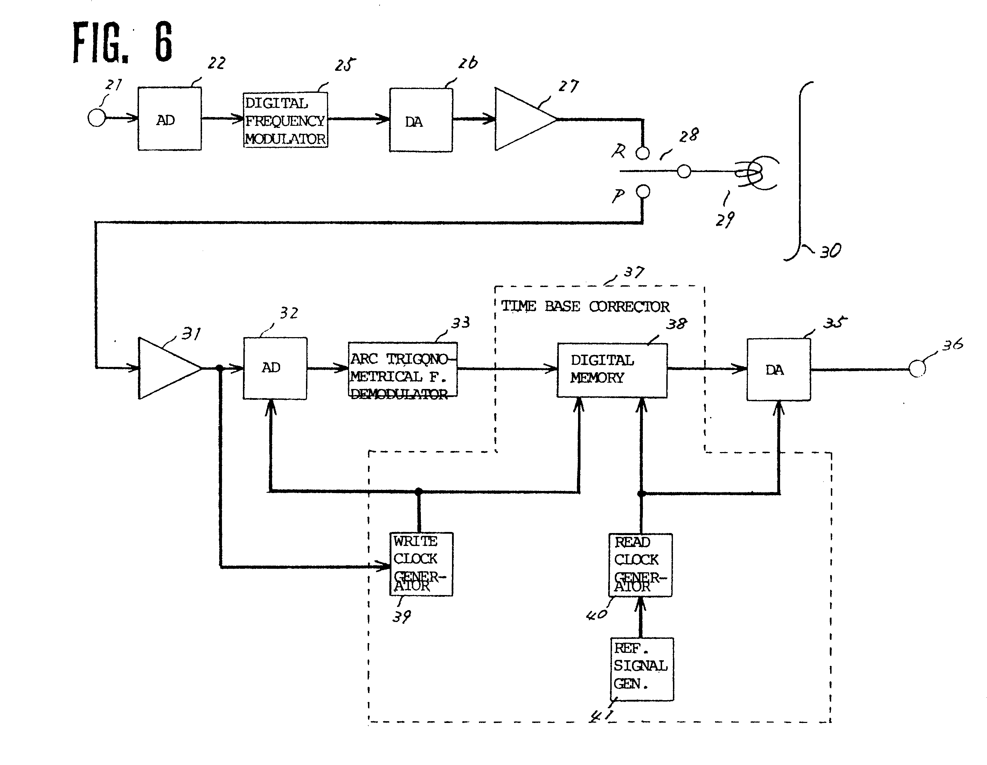

Since the demodulation using an arc trigonometric function calculates the demodulated signal directly from the formulus (2) representing the FM signal, there is no fear to generate a moire interference which is caused by the lower side-band signal of the double frequency carrier leaked into the base band of the modulated signal in the analog pulse counter type demodulator. FIG. 5 shows the spectrum of the demodulated signal outputted from the arc trigonometrical function demodulator 33. The carrier frequency $f_c$ is close to the input signal maximum frequency $f_m$ because there is no fear to cause a beat interference. In other words, according to the present invention, the carrier frequency $f_c$ can be selected to satisfy the following condition:

$$f_c \leqq 1.5\, f_m \ . . . . . . . . . . . . . (3)$$

This means that the FM signal can be transmitted through a transmission path having an narrow frequency band, or recorded on a recording medium via a head, both having a narrow recordable frequency band. In other words, a low band frequency modulation with a reduced moire interference can be realized.

It should be noted that the tape recorder shown in FIG. 4 may further comprises an emphasis circuit for emphasizing the input signal, a clip circuit for clipping a part of the emphasized signal (e.g., white part and dark park in the case of a video signal), and a de-emphasis circuit having a reverse characteristic to that of the emphasis circuit for de-emphasizing the demodulated signal.

FIG. 6 shows a schematic block diagram of a magnetic tape recorder as another embodiment of the present invention. This embodiment differs from the embodiment shown in FIG. 4 in that a digital time base corrector 37 is provided between arc trigonometric function demodulator 33 and DA converter 35. The digital demodulated signal outputted from the demodulator 33 is write into a digital memory 38 in time base corrector 37 in response to a write clock the frequency of which fluctuates according to the time base fluctuation of the FM signal reproduced from magnetic tape 30. The thus written signal in memory is read out in response to a read clock having a fixed frequency thereby to obtain a signal having the time base fluctuation been corrected. This time base fluctuation corrected signal is applied to DA converter 35.

The write clock is produced by a write clock generator 39 from the burst signal contained in the FM signal reproduced from tape 30. The read clock is produced by a read clock generator 40 from a reference signal having a fixed frequency generated by a reference signal generator 41. AD converter 32 is operated in response to the write clock, and DA converter 35 is operated in response to the read clock.

The time base corrector 37 having the above-described function itself is known as shown in U.S. Patent No. 4,335,393, for example. But, the important point in this embodiment is that the time base correction is performed in digital signal form, so that the correction range is wide and a stable time base correction is possible without affected by temperature change, life of the components and external noises. Thus, the direct FM recording can be realized.

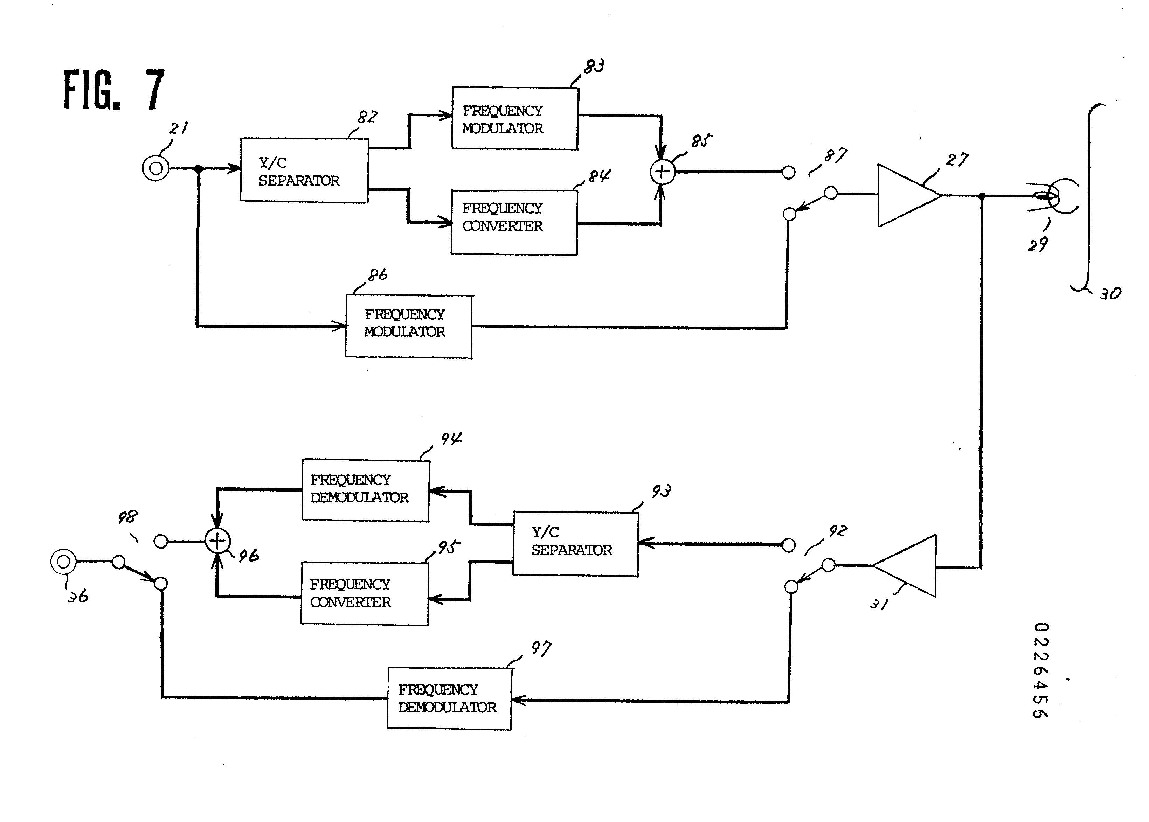

FIG. 7 shows a schematic block diagram of a magnetic tape recorder as still another embodiment of the present invention. This embodiment can operate in two modes -the conventional color under recording mode and the direct FM recording mode. Either one of the two modes is selected by switches 87, 93 and 98. A composite color video signal is fed to input terminal 21.

In the color under recording mode, the composite video signal is divided into a luminance signal (Y) and a chrominance signal (C) by a YC separator 82. The luminance signal is frequency-modulated by a frequency modulator 83. The frequency of the chrominance signal is converted to a frequency in a low frequency band by a frequency converter 84. The frequency-modulated luminance signal and the frequency-converted chrominance signal are synthesized by a synthesizer 85 to be the so-called color under recording signal. The color under recording signal is passed through switch 87, amplified by amplifier 27, and recorded by head 29 onto magnetic tape 30. The recorded signal is reproduced by head 29, amplified by amplifier 31, passed through switch 92, and divided into a luminance signal and a chrominance signal by a YC separator 93. The luminance signal is frequency-demodulated by a frequency demodulator 94. The frequency of the chrominance signal is converted to the original frequency. The frequency-demodulated luminance signal and the frequency-reconverted chrominance signal are synthesized by a synthesizer 96 to be a composite video signal equivalent to the original composite video signal, which is passed through switch 98 and outputted from output terminal 36.

In the direct FM recording mode, the input composite video signal is directly frequency-modulated by a frequency modulator 86 to be the direct FM signal. This frequency modulator comprises AD converter 22, digital frequency modulator 25 and DA converter 26 as shown in FIG. 4. The direct FM signal is passed through switch 87, amplified by amplifier 27, and recorded by head 29 onto tape 30. The recorded signal is reproduced by head 29, amplified by amplifier 31, passed through switch 92, and frequency-demodulated by a frequency demodulator 97 to be a composite video signal equivalent to the original composite video signal. This frequency demodulator 97 comprises AD converter 32, arc trigonometrical function demodulator 33 and DA converter 35 as shown in FIG. 4, or further comprises time base corrector 37 as shown in FIG. 6. The composite video signal is passed through switch 98 and outputted from terminal 36.

As described above, by switching only the signal processing systems in a video tape recorder, such a video tape recorder that has a high picture quality recording/reproducing function and compatible to the convention color under recording type video tape recorders can be realized at low cost. In the direct FM recording mode, a high performance iron oxide tape or metal tape may be used as magnetic tape 30. Head 29 is shared in both of the two modes. For further reducing cost, frequency modulator and demodulator 83 and 94 may be removed, and frequency modulator and demodulator 86 and 97 may be shared in both of the two modes by providing additional switches.

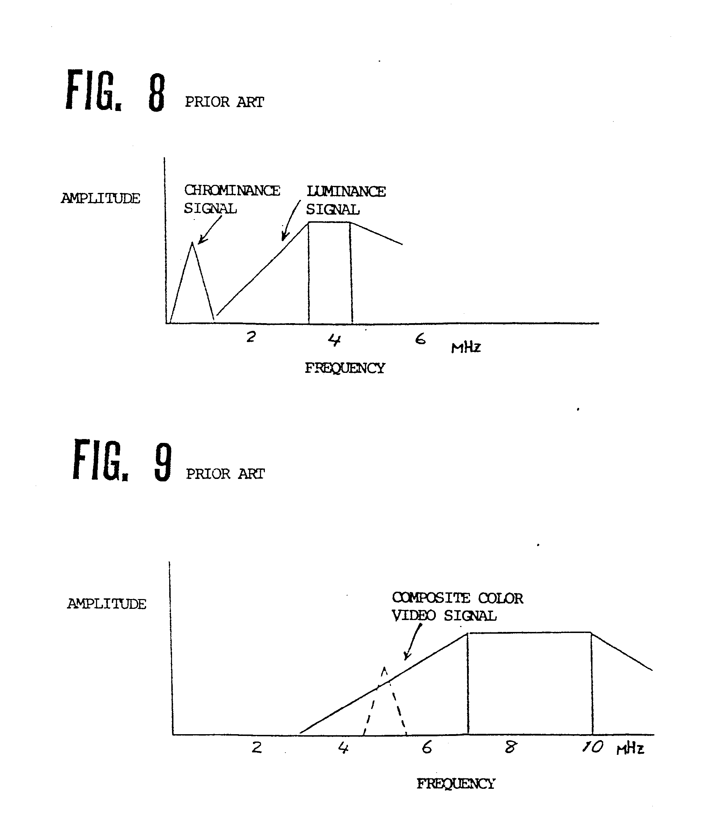

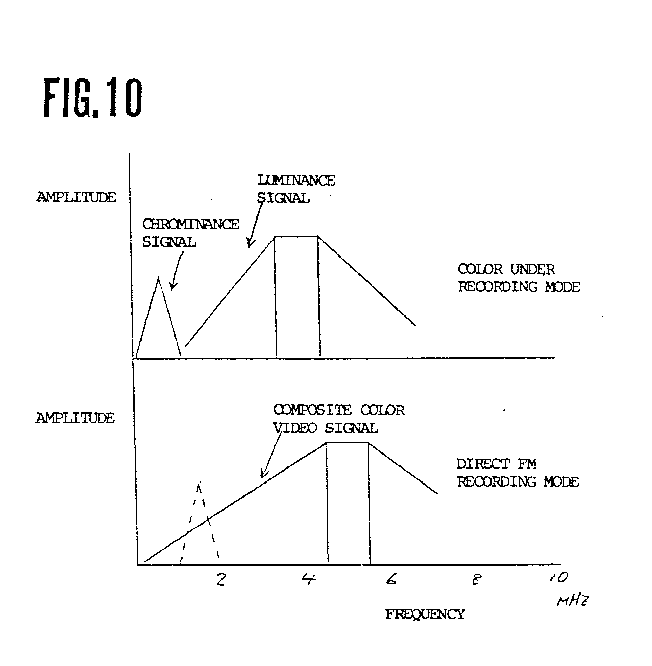

The occupied frequency bans in the conventional color under recording video tape recorders and the conventional direct FM recording video tape recorders are different from each other as shown in FIG. 8 and FIG. 9, respectively. In a video tape recorder operable in either of the two modes, the occupied frequency band in the direct FM recording mode is needed to be as narrow as possible to close the occupied frequency band in the color under recording mode. This requirement can be satisfied by the present invention which can satisfy the above condition (3) by using digital frequency modulation and digital frequency demodulator using arc trigonometrical function as described above. FIG. 10 shows a frequency allocation diagram in each of the color under recording mode and the direct FM recording mode according to the present invention.

In the above description, magnetic tape recorders have been described. However, the present invention is applicable to any other signal recording apparatuses such as, for example, audio tape recorder, audio disk player and video disk player. The head may be a magnetic head, an optical head, or any other type of head. The present invention is applicable also to a signal transmission system such as, for example, a cable television system. Further, the configuration of each of the digital frequency modulator and arc trigonometric function demodulator may be changed or modified variously within the scope of the present invention. The scope of the present invention is solely defined in the appended claims.

## Claims

1. A signal recording/reproducing apparatus comprising:
digital frequency modulating means for frequency-modulating an input signal in digital signal form to obtain a frequency-modulated signal (FM signal);
means for recording said FM signal on a recording medium and reproducing the recorded FM signal; and
digital frequency demodulating means for frequency-demodulating the reproduced FM signal in digital signal form using an arc trigonometrical function to obtain an output signal equivalent to said input signal.

2. The apparatus according to claim 1, wherein said input signal is a video signal having a maximum frequency $f_m$ and said digital frequency modulating means uses a carrier frequency $f_c$ for modulating said video signal, said carrier frequency satisfying the following condition:

$f_c \leqq 1.5 f_m$ .

3. The apparatus according to claim 1, further comprising time base correcting means provided after said digital frequency demodulating means for correcting time base fluctuation of the output signal of said digital frequency demodulating means.

4. The apparatus according to claim 1, wherein said digital frequency modulating means comprises an analog-to-digital converter for converting said input signal to a digital signal, a digital frequency modulator for frequency-modulating said digital signal to obtain a digital FM signal, and a digital-to-analog converter for converting said digital FM signal to an analog FM signal as the FM signal recorded on said recording medium, and wherein said digital frequency demodulating means comprises an analog-to-digital converter for converting the reproduced FM signal to a digital reproduced FM signal, a digital frequency demodulator for producing a digital frequency-demodulated signal from said digital reproduced FM signal by using the arc trigonometrical function, and a digital-to-analog converter for converting said digital frequency-demodulated signal to an analog frequency-demodulated signal as said output signal.

5. A signal recording /reproducing apparatus for recording a video signal on a recording medium and reproducing the recorded video signal, comprising:

first signal processing means which records the video signal on said recording medium after frequency-modulating a luminance signal of the video signal and converting a frequency band of a chrominance signal of the video signal to a low frequency band, and reproduces the video signal by frequency-demodulating the frequency-modulated luminance signal and reconverting the low frequency band chrominance signal to the original frequency band of the chrominance signal;

second signal processing means which records the video signal after directly frequency-modulating the video signal in digital signal form, and reproduces the video signal by frequency-demodulating the frequency-modulated video signal in digital signal form; and

switching means for selecting either one of said first and second signal processing means to be operated.

# FIG. 1 PRIOR ART

FREQUENCY MODULATOR _ 51

Vcc

58  54  55  59

56  57

60  63  61

52

VIDEO INPUT

53  P 62

64

65  66

67  68

FREQUENCY DEMODULATOR  69

70  71  A  73 C  75

LIMI-TER

DELAY

LPF

VIDEO OUTPUT

D

72  B

74

# FIG. 2 PRIOR ART

OSCILLATING
FREQUENCY F

→ INPUT VOLTAGE V

# FIG. 2 PRIOR ART

A

B

C

D

0226456

# FIG. 3 PRIOR ART

(a) AMPLITUDE vs FREQUENCY, with markings $f_m$, $f_c$, $2f_c$, $4f_c$

(b) AMPLITUDE vs FREQUENCY, with markings $f_m$, $f_c$, $2f_c$

# FIG. 5

AMPLITUDE vs FREQUENCY, with markings $f_m$, $f_c$, $2f_c$, $4f_c$

# FIG. 4

DIGITAL FREQUENCY MODULATOR

$Vi(nT)$  $2\pi fd$  DEVIATION GEN.  $2\pi f_cT$  CARRIER GENERATOR  $z^{-1}$  $\theta(nT)$  $\cos\theta$  $F(nT)$  AD  DA

DIGITAL ARC TRIGONOMETRICAL FUNCTION DEMODULATOR

AD  90° PHASE SHIFT.  $\div$  $\tan^{-1}\theta$  $z^{-1}$  $-$  DA

# FIG. 6

# FIG. 7

0226456

# FIG. 8 PRIOR ART

AMPLITUDE

CHROMINANCE SIGNAL

LUMINANCE SIGNAL

2   4   6   MHz

FREQUENCY

# FIG. 9 PRIOR ART

AMPLITUDE

COMPOSITE COLOR VIDEO SIGNAL

2   4   6   8   10   MHz

FREQUENCY

# FIG.10

AMPLITUDE

LUMINANCE
SIGNAL

CHROMINANCE
SIGNAL

COLOR UNDER
RECORDING MODE

AMPLITUDE

COMPOSITE COLOR
VIDEO SIGNAL

DIRECT FM
RECORDING MODE

2      4      6      8      10

MHz

FREQUENCY